(19) Europäisches Patentamt / European Patent Office / Office européen des brevets

(11) **EP 3 550 758 B1**

(12) **EUROPEAN PATENT SPECIFICATION**

(45) Date of publication and mention of the grant of the patent:
**09.03.2022 Bulletin 2022/10**

(21) Application number: **18735814.8**

(22) Date of filing: **05.01.2018**

(51) International Patent Classification (IPC):
*H04L 5/00* (2006.01)   *H04W 72/04* (2009.01)
*H04W 72/08* (2009.01)   *H04W 72/12* (2009.01)

(52) Cooperative Patent Classification (CPC):
**H04L 5/00; H04W 72/04; H04W 72/08; H04W 72/12**

(86) International application number:
**PCT/CN2018/071614**

(87) International publication number:
**WO 2018/127138 (12.07.2018 Gazette 2018/28)**

(54) **METHOD FOR CONFIGURING REFERENCE SIGNAL, BASE STATION, USER EQUIPMENT AND SYSTEM**

VERFAHREN ZUR KONFIGURATION EINES REFERENZSIGNALS, BASISSTATION, BENUTZERGERÄT UND SYSTEM

PROCÉDÉ DE CONFIGURATION DE SIGNAL DE RÉFÉRENCE, STATION DE BASE, ÉQUIPEMENT UTILISATEUR ET SYSTÈME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.01.2017 CN 201710009010**

(43) Date of publication of application:
**09.10.2019 Bulletin 2019/41**

(73) Proprietor: **Huawei Technologies Co., Ltd.
Longgang District
Shenzhen, Guangdong 518129 (CN)**

(72) Inventors:
• **TANG, Xiaoyong
Shenzhen
Guangdong 518129 (CN)**

• **ZHANG, Xi
Shenzhen
Guangdong 518129 (CN)**

(74) Representative: **Maiwald Patent- und Rechtsanwaltsgesellschaft mbH
Elisenhof
Elisenstraße 3
80335 München (DE)**

(56) References cited:
**WO-A1-2016/008101    WO-A2-2011/105726
CN-A- 101 931 437    CN-A- 102 714 564
CN-A- 103 238 356    US-A1- 2015 270 936**

**Description**

**TECHNICAL FIELD**

This application relates to the field of wireless communications technologies, and in particular, to a reference signal configuration method, a base station, user equipment, and a system.

**BACKGROUND**

With deployment of wireless communications networks, radio spectrum resources are increasingly insufficient. High-frequency bands (carrier frequencies above 6 GHz are usually referred to as high-frequency bands) include abundant spectrum resources, and can address a spectrum resource shortage problem and can also significantly increase a cellular network throughput, thereby becoming an important research object of a current wireless communications technology.

However, in the high-frequency band, a communication frequency is relatively high, and a signal has a relatively large path loss in a propagation space. To resolve a problem of a large signal propagation loss, an antenna array is used in an existing high-frequency system. In the prior art, relatively narrow transmit and receive beams (Beam) are mainly used to obtain a relatively high beamforming (Beamforming) gain or array gain, so as to increase a receive power or a receive signal-to-noise ratio of a signal. When a base station (base station, BS) side or a user equipment (user equipment, UE) side uses a narrow beam for communication, an angle of arrival or an angle of departure of a radio signal may change due to factors such as movement of a user and blocking of an obstacle. Consequently, directions of transmit and receive beams do not match, and a relatively high beamforming gain cannot be obtained, causing communication interruption. In a propagation environment with various scattering factors, a plurality of transmit and receive beams may be used for communication between the base station and the user equipment.

In a high-frequency communications system that uses a high frequency band resource, transmit and receive beams, namely, analog beams, are transmission carriers for communication. The analog beams are directional, and cannot implement full cell coverage as in an existing wireless communications system, for example, a long term evolution-advanced (long term evolution-advanced, LTE-A) system. Therefore, it is necessary to provide a reference signal configuration method applicable to the high-frequency communications system.

WO 2011/105726 A2 describes a method and apparatus for providing information indicating radio resources for multi-cell interference measurement at a base station, so that a user equipment can more accurately measure interference.

**SUMMARY**

The invention is defined by the appended claims. The appended claims comprise a reference signal configuration method according to claim 1, an inter-related reference signal configuration method by a user equipment according to claim 5, a corresponding base station according to claim 9, a corresponding user equipment according to claim 10, a corresponding computer program product which runs on a base station according to claim 12 and a corresponding computer program product which runs on a user equipment according to claim 13. Embodiments are further defined by the dependent claims.

**BRIEF DESCRIPTION OF DRAWINGS**

The following describes the technical solutions in the embodiments of the present invention with reference to the accompanying drawings in the embodiments of the present invention.

FIG. 1A and FIG. 1B are a schematic diagram of a time-frequency resource location of a CSI-RS of LTE-A in the prior art;
FIG. 2A is a schematic diagram of a communications system according to an embodiment of the present invention;
FIG. 2B is a schematic diagram of a communications system according to an embodiment of the present invention;
FIG. 3 is a schematic diagram of a downlink frame according to an embodiment of the present invention;
FIG. 4 is a schematic diagram of a cell division manner according to an embodiment of the present invention;
FIG. 5 is a schematic diagram of a time domain offset manner of a CSI-RS according to an embodiment of the present invention;
FIG. 6A is a schematic diagram of a time domain offset manner of a CSI-RS according to an embodiment of the present invention;
FIG. 6B is a schematic diagram of a time domain offset manner of a CSI-RS according to an embodiment of the present invention;

FIG. 7 is an example flowchart of a reference signal configuration method according to an embodiment of the present invention;

FIG. 8 is an example flowchart of a reference signal configuration method according to an embodiment of the present invention;

FIG. 9 is a schematic structural diagram of a base station according to an embodiment of the present invention; and

FIG. 10 is a schematic structural diagram of UE according to an embodiment of the present invention.

## DESCRIPTION OF EMBODIMENTS

The following describes the technical solutions in the embodiments of the present invention with reference to the accompanying drawings in the embodiments of the present invention.

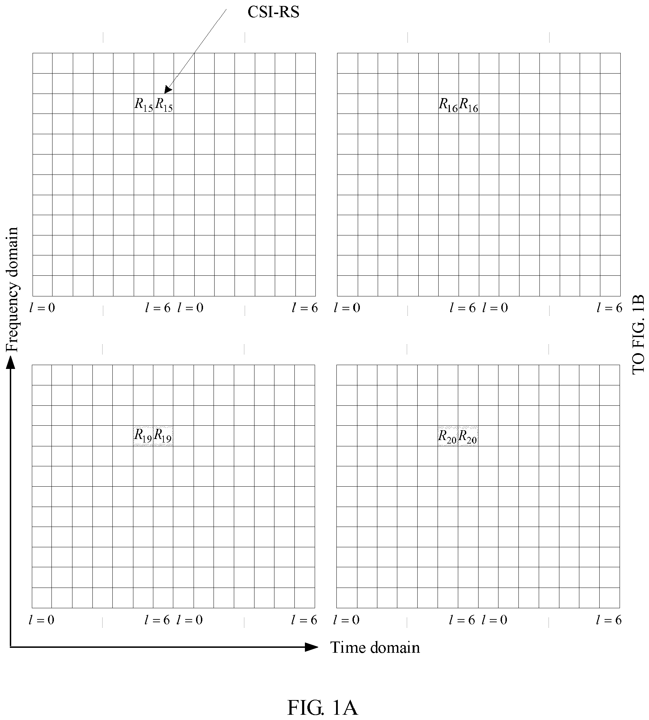

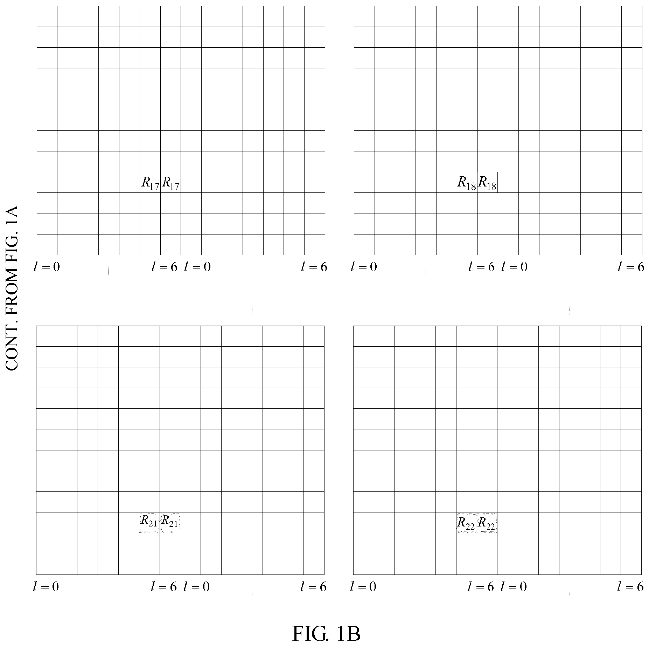

In a wireless communications system, for example, in a long term evolution (long term evolution, LTE) system or an LTE-A system, a reference signal may include a channel state information-reference signal (channel state information-reference signal, CSI-RS). Optionally, the reference signal may further include another type of reference signal, for example, a cell-specific reference signal (cell-specific reference signal, CRS). FIG. 1A and FIG. 1B are a schematic diagram of a time-frequency resource location of a CSI-RS of LTE-A in the prior art. During measurement of CSI-RSs of cells, to avoid mutual interference between the CSI-RSs of the cells, a frequency hopping manner is used for the CSI-RSs of the cells to configure the time-frequency resource location. In frequency domain, frequency hopping may be implemented in a form of one subcarrier, or frequency hopping may be implemented in a form of a plurality of subcarriers (for example, 12 subcarriers). For example, in FIG. 1A and FIG. 1B, R15, R17, R19, and R21 are located in different subcarriers. R16, R18, R20, and R22 are also located in different subcarriers.

In a high-frequency communications system, an analog beam is a communication transmission carrier. That is, a transmission signal of the high-frequency communications system is transmitted in an analog beam form. The analog beam is directional, and cannot implement full cell coverage as the LTE-A system. Therefore, impact of directivity of the analog beam needs to be considered for transmission of the reference signal. If a time-frequency resource configuration solution for a CSI-RS in LTE-A in the prior art is used, the following two problems are caused.

1. Excessively long period for obtaining channel state information (channel state information, CSI): Because an analog beam of a high-frequency system is directional, a CSI-RS port covers only a limited direction. A plurality of CSI periods are required for obtaining CSIs of all user equipments in a cell in which the CSI-RS port is located. 2. Relatively low possibility of code domain multiplexing (Coding domain multiplexing, CDM) between symbols for the CSI-RS port due to impact of phase noise: In the time-frequency resource configuration solution for the CSI-RS of the LTE-A system, a CSI-RS port may cross two OFDM symbols in a CDM manner. However, in the high-frequency system, symbols are completely independent from each other due to phase noise, and therefore a possibility of performing CDM between a plurality of OFDM symbols is relatively low.

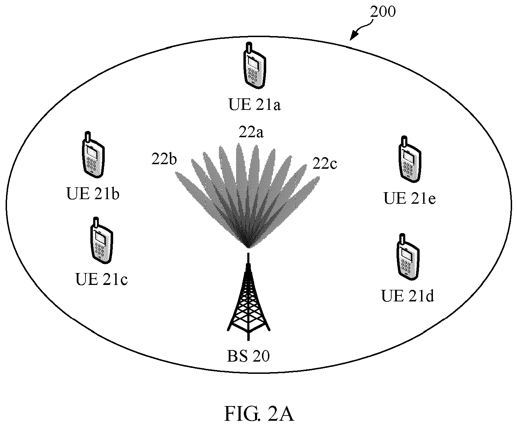

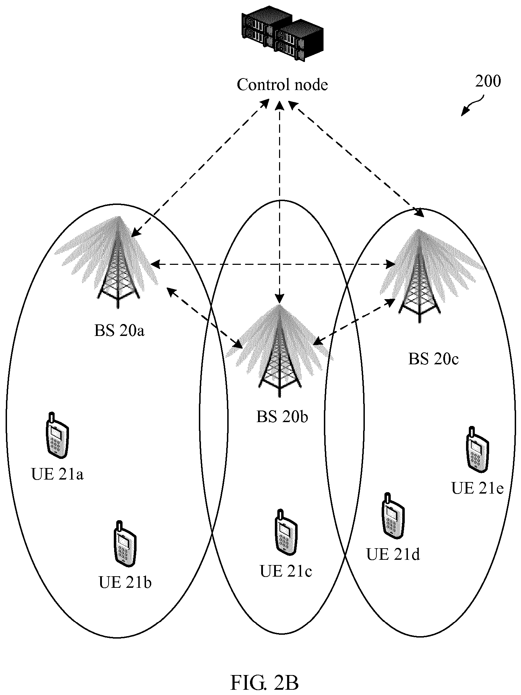

A reference signal configuration manner in the prior art is not applicable to the high-frequency communications system, and therefore it is necessary to propose a new solution to implement reference signal configuration in the high-frequency communications system. In the embodiments of the present invention, a solution may be provided based on a communications system shown in FIG. 2A or FIG. 2B, so as to implement reference signal configuration of the high-frequency communications system, and improve reference signal transmission efficiency and transmission quality. As shown in FIG. 2A and FIG. 2B, the embodiments of the present invention provide a communications system 200. The communications system 200 includes at least one base station (base station, BS) and a plurality of UEs. For example, in FIG. 2A and FIG. 2B, the plurality of UEs may be denoted as UE 21a to UE 21e.

In the solutions of the embodiments, in the communications system 200 shown in FIG. 2A, the plurality of UEs may be located within coverage of a same base station, and the plurality of UEs may be served by the same base station. For example, in FIG. 2A, the UE 21a to the UE 21e are located within coverage of a base station 20 and served by the base station 20. The base station 20 may control an antenna beam 22a to an antenna beam 22c of an antenna array, to provide dynamic beamforming for the UEs in a cell covered by the base station 20. For example, the UE 21a may receive a signal from the base station 20 or send a signal to the base station 20 by using the beam 22a. The antenna beam herein may be referred to as a beam, an analog beam, a transmit beam, a receive beam, or the like. For different UEs, a beam direction may be different. The antenna beams in the figure indicate some examples of directions, and a quantity of antenna beams and directions of the antenna beams are not limited thereto.

Optionally, as shown in FIG. 2B, the plurality of UEs in the communications system 200 may alternatively be located within coverage of different base stations, for example, a base station 20a, a base station 20b, and a base station 20c, as shown in FIG. 2B. The UE 21a and the UE 21b are located within coverage of the base station 20a, and the UE 21a and the UE 21b are served by the base station 20a. The UE 21c is located within coverage of the base station 20b and served by the base station 20b. The UE 21d and the UE 21e are located within coverage of the base station 20c, and the UE 21d and the UE 21e are served by the base station 20c. Each base station in FIG. 2B may communicate with UEs within coverage of a respective cell by using antenna beams similar to those of the base station 20 in FIG. 2A. The base station 20a, the base station 20b, and the base station 20c may be controlled by using a same control node, or the three base stations may communicate with each other.

In the embodiments of the present invention, the communications system 200 may be various radio access technology (radio access technology, RAT) systems, for example, a code division multiple access (code division multiple access, CDMA) system, a time division multiple access (time division multiple access, TDMA) system, a frequency division multiple access (frequency division multiple access, FDMA) system, an orthogonal frequency division multiple access (orthogonal frequency-division multiple access, OFDMA) system, a single carrier frequency division multiple access (single carrier FDMA, SC-FDMA) system, and another system. The terms "system" and "network" are interchangeable. The CDMA system may implement radio technologies such as universal terrestrial radio access (universal terrestrial radio access, UTRA) and CDMA 2000. The UTRA may include a wideband CDMA (wideband CDMA, WCDMA) technology and another variation of the CDMA technology. The Interim Standard (interim standard, IS) 2000 (IS-2000), the IS-95 standard, and the IS-856 standard may be applicable to the CDMA 2000. The TDMA system may implement radio technologies such as a global system for mobile communication (global system for mobile communication, GSM). The OFDMA system may implement radio technologies such as evolved universal terrestrial radio access (evolved UTRA, E-UTRA), ultra mobile broadband (ultra mobile broadband, UMB), IEEE 802.11 (Wi-Fi), IEEE 802.16 (WiMAX), IEEE 802.20, and Flash OFDMA. The UTRA is a UMTS and the E-UTRA is an evolution version of the UMTS. LTE, LTE-A, and various LTE-based evolution versions defined by the 3GPP are new versions of the UMTS using the E-UTRA. In addition, the communications system 200 may be further applicable to a future-oriented communications system, for example, a new radio (new radio, NR) system, or a new generation network system such as a 5G system. A system architecture and a service scenario described in the embodiments of the present invention are intended to describe the technical solutions in the embodiments of the present invention more clearly, and do not constitute any limitation on the technical solutions provided in the embodiments of the present invention. A person of ordinary skill in the art may understand that with network architecture evolution and occurrence of a new service scenario, the technical solutions provided in the embodiments of the present invention are also applicable to a similar technical problem. The communications system 200 in the embodiments of the present invention may implement only one system, or may simultaneously implement a plurality of systems, for example, simultaneously implement the LTE system and the NR system. Any base station or UE in the communications system 200 may support only one system, or may simultaneously support a plurality of systems. Based on one or more of the foregoing systems, the communications system 200 may use a high-frequency band resource for communication, that is, implement the high-frequency communications system.

In the embodiments of the present invention, the base station (for example, the base station 20, the base station 20a, the base station 20b, and the base station 20c) is an apparatus deployed in a radio access network and configured to provide a wireless communication function for the UE. The base station may include various forms, for example, a macro base station, a micro base station (also referred to as a small cell), a relay station, or an access point. In systems using different radio access technologies, a device having a function of a base station may be differently named. For example, the device is referred to as an evolved NodeB (evolved NodeB, eNB or eNodeB) in the LTE system, or referred to as a NodeB (Node B) in a third generation (3rd generation, 3G) system. In a subsequent evolved system, the base station may alternatively be referred to as a transmitting receiving point (Transmitting receiving point, TRP), a gNB (also referred to as a 5G NodeB), or the like. For ease of description, in all the embodiments of the present invention, all the foregoing apparatuses that provide the wireless communication function for the UE are collectively referred to as a base station or BS.

The UE included in the embodiments of the present invention may include various handheld devices, in-vehicle devices, wearable devices, and computing devices that have a wireless communication function, or other processing devices connected to a wireless modem. Alternatively, the UE may be referred to as a mobile station (mobile station, MS for short), a terminal (terminal), a terminal device (terminal equipment), or may include a subscriber unit (subscriber unit), a cellular phone (cellular phone), a smartphone (smart phone), a radio data card, a personal digital assistant (personal digital assistant, PDA) computer, a tablet computer, a wireless modem (modem), a handheld (handheld) device, a laptop computer (laptop computer), a cordless phone (cordless phone), or a wireless local loop (wireless local loop, WLL) station, a machine type communication (machine type communication, MTC) terminal, or the like. For ease of description, in all the embodiments of the present invention, the aforementioned devices are collectively referred to as UE.

It should be noted that system types supported by the communications system 200 shown in FIG. 2A and FIG. 2B, and quantities and types of base stations and UEs that are included in the communications system 200 are only examples, and the embodiments of the present invention are not limited thereto. For conciseness of description, this is not described in the figures again. In addition, in the communications system 200 shown in FIG. 2A and FIG. 2B, although the base station 20, the base station 20a to the base station 20c, and the UE 21a to the UE 21e are shown, the communications system 200 may be not limited to including the base stations and the UEs. For example, the communications system 200 may further include a core network device or a device configured to carry a virtual network function.

These are obvious for a person of ordinary skill in the art, and are not described in detail.

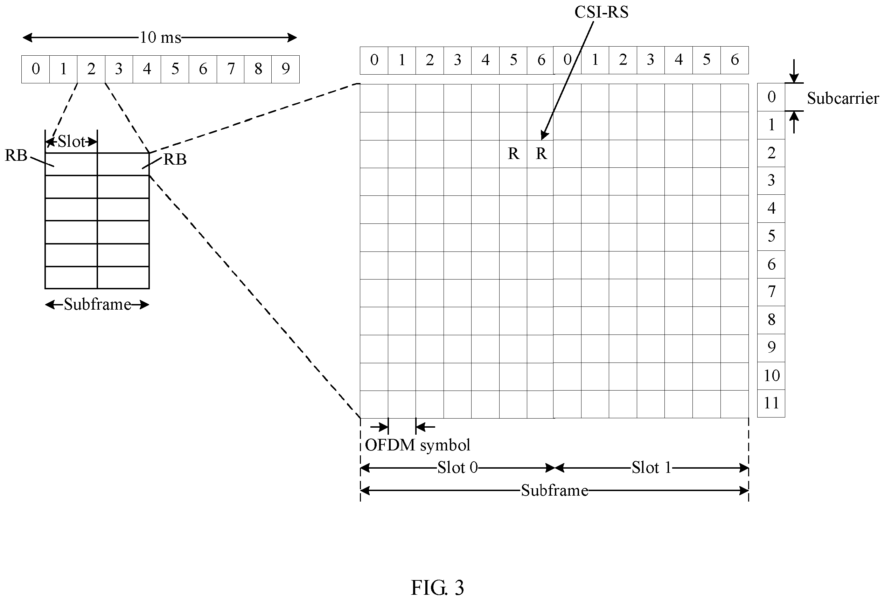

In the following descriptions, a network system supporting an orthogonal frequency division multiplexing (orthogonal frequency division multiplexing, OFDM) OFDM technology on a downlink is used as an example for description. OFDM is a spread spectrum technology for data modulation on a plurality of subcarriers in an OFDM symbol. In frequency domain, subcarriers are separated precisely in frequency. The separation provides "orthogonality", so that a receiver can restore data from subcarriers. In time domain, a guard interval (for example, a cyclic prefix) may be added to each OFDM symbol to reduce interference between OFDM symbols. On an uplink, a form of a discrete Fourier transform (discrete fourier transform, DFT) spreading-based OFDM symbol may be used. FIG. 3 is a schematic diagram of a downlink frame according to an embodiment of the present invention. A frame (10 ms) is divided into 10 subframes (1 ms) with a same length. Each subframe includes two consecutive slots, for example, a slot 0 and a slot 1 in a resource grid. Each slot may include a resource block (resource block, RB). The resource grid is divided into a plurality of resource elements (resource element, RE). When a normal cyclic prefix is used for an OFDM symbol, one RB includes 12 contiguous subcarriers in frequency domain and includes 7 consecutive OFDM symbols in time domain, or includes 84 REs. When an extended cyclic prefix is used for an OFDM symbol, one RB includes 12 contiguous subcarriers in frequency domain and includes 6 consecutive OFDM symbols in time domain, or includes 72 REs. The base station may allocate resources and schedule data transmission for different UEs based on a granularity of an RB. An RB defined at a physical layer is referred to as a PRB, and each PRB occupies 180 kHz in frequency domain. An RE may include a reference signal, for example, a CSI-RS. A quantity of bits carried in each RE depend on a modulation scheme order. For example, a larger quantity of resource blocks received by the UE and a higher modulation scheme order indicate a higher data rate for the UE.

Time-frequency resource configuration for a CSI-RS

Referring to FIG. 3, a CSI-RS may be transmitted by using a resource element in a resource grid, and therefore a time-frequency resource needs to be properly configured for the CSI-RS. In a high-frequency communications system, to reduce a period for obtaining CSI and obtain CSI information of all user equipments more quickly, a CSI-RS port is prevented from being mapped to a plurality of OFDM symbols as much as possible. In addition, considering impact of phase noise between symbols, the CSI-RS port is prevented from crossing a plurality of OFDM symbols in a CDM manner as that in LTE-A. For example, one CSI-RS port is mapped to one OFDM symbol. However, the one OFDM symbol may carry one or more pieces of CSI-RS port information. Considering that different OFDM symbols are sent and received by using different analog beams, and to reduce overheads for time-frequency resource configuration and indication for the CSI-RS, optionally, frequency-domain locations of CSI-RSs in a plurality of OFDM symbols may be the same. The CSI-RS port may be an antenna port or a corresponding virtual port obtained through baseband digital weighting in a communications device such as a base station or UE. A quantity of CSI-RS ports (or a quantity of antenna ports or virtual ports) may be 1, 2, 4, 8, or the like.

The CSI-RS is mainly used for CSI measurement, and quantized CSI information such as a rank indicator (rank indicator, RI), a precoding matrix indication (precoding matrix indication, PMI), and a channel quality indicator (channel quality indicator, CQI) of a channel is fed back to support different transmission modes. CSI information fed back by the user equipment may be used to choose a data transmission mode, for example, to choose a modulation and coding scheme (modulation and coding scheme, MCS) order, a quantity of RBs occupied for transmission, a size of a transport block (transport block, TB), or the like. The CSI information is directly determined by using a receive signal-to-noise ratio of the user equipment, and the receive signal-to-noise ratio includes two parts: received signal energy and inter-cell interference. In a CSI measurement process, interference from another CSI-RS port should be avoided for inter-cell interference. Therefore, in the CSI measurement process, resource elements of CSI-RSs of cells are spaced at intervals of a specific quantity of OFDM symbols in time domain. The quantity of OFDM symbols of the interval may be fixed, or may be dynamically variable. Resource elements of CSI-RSs of one cell may be spaced at intervals of a specific quantity of OFDM symbols in time domain, or may be spaced at intervals of a specific quantity of subcarriers in frequency domain.

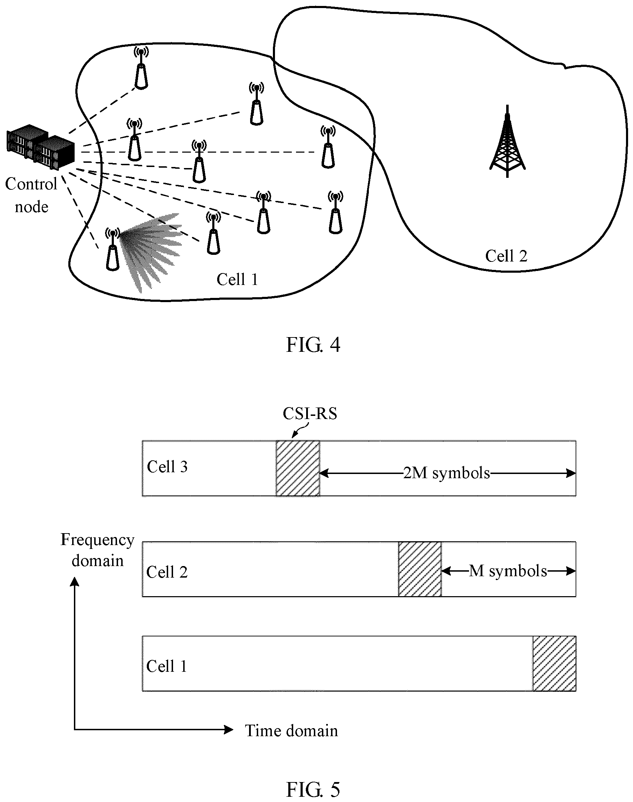

In this embodiment of the present invention, a "cell" may be an area within a service area covered by one or more base stations (for example, one or more TRPs). In other words, the one or more base stations may be corresponding to one cell. FIG. 4 is a schematic diagram of a cell division manner according to an embodiment of the present invention. FIG. 4 shows two cells: a cell 1 and a cell 2. The cell 1 may be formed by service areas covered by a plurality of base stations, and the cell 2 may be formed by a service area covered by one base station. In addition, the plurality of base stations in the cell 1 may be controlled by using a same control node. "Between cells" may be "between any two of a plurality of cells".

Notification manner of a time domain offset location of a CSI-RS

In a CSI measurement process, both a base station and UE need to know a time-domain location of a CSI-RS, so that the base station performs time-frequency resource mapping based on the time-domain location of the CSI-RS, and the UE performs CSI-RS detection and measurement based on the time-domain location of the CSI-RS.

Scenario 1: FIG. 5 is a schematic diagram of a time domain offset manner of a CSI-RS according to an embodiment of the present invention. As shown in FIG. 5, a cell 1, a cell 2, and a cell 3 each have a CSI-RS. A case of three cells in the figure is an example, and this embodiment of the present invention is not limited to the case of three cells. The CSI-RSs of the three cells are spaced at intervals of a fixed quantity of OFDM symbols in time domain. For example, an OFDM symbol in which the CSI-RS of the cell 1 is located is used as a reference point, a quantity of interval symbols for the CSI-RS of the cell 1 is 0, a quantity of interval symbols for the CSI-RS of the cell 2 is M OFDM symbols, and a quantity of interval symbols for the CSI-RS of the cell 3 is 2M OFDM symbols. This is equivalent to that a time domain offset between cells is M OFDM symbols.

CSI-RSs of different cells are shifted by a fixed quantity of OFDM symbols in time domain, and a time-domain location, of a CSI-RS, obtained after the CSI-RS is shifted in time domain may be calculated based on a cell ID. For example, the following formula may be used for calculation.

$$\text{Time-domain location of a CSI-RS} = \text{mod (Cell ID, M)} * M \qquad (1)$$

where Cell ID is a cell ID (which, for example, may be a physical ID or a logical ID of a base station), and M represents a fixed quantity of time domain offset symbols.

The base station may calculate the time-domain location of the CSI-RS based on the cell ID and the quantity of time domain offset symbols, and complete mapping of the CSI-RS. For example, the base station may calculate the time-domain location of the CSI-RS according to the formula (1), and complete mapping the CSI-RS based on the time-domain location.

After accessing a cell, the UE may calculate, based on an obtained cell ID and an obtained quantity M of time domain offset symbols, a time-domain location of a CSI-RS of the cell accessed by the UE, and detect the CSI-RS on the calculated time-domain location. Optionally, the UE may further directly obtain the time-domain location of the CSI-RS from the base station.

A plurality of OFDM symbols used for CSI-RS transmission may be included in a cell. The time-domain location, obtained according to the formula (1), of the CSI-RS may be a time-domain location of any one of the OFDM symbols used for CSI-RS transmission (for example, a first or last OFDM symbol used for CSI-RS transmission) in the cell. A time-domain location of another OFDM symbol used for CSI-RS transmission may have a specific time domain offset relative to the time-domain location, obtained according to the formula (1), of the CSI-RS. In a solution of the scenario 1, reference may further be made to an implementation described in the following scenario 2. The base station notifies the UE of an offset value offset of the another OFDM symbol used for CSI-RS transmission in the cell. The offset value offset may indicate an offset value of the time-domain location of the another OFDM symbol used for CSI-RS transmission in the cell relative to the time-domain location, obtained according to the formula (1), of the CSI-RS. The UE may obtain, based on the offset value offset, the time-domain location of the another OFDM symbol used for CSI-RS transmission in the cell.

If the plurality of OFDM symbols used for CSI-RS transmission in the cell are consecutive in time domain, time-domain locations of the plurality of OFDM symbols used for CSI-RS transmission in the cell may be determined based on a quantity of OFDM symbols used for CSI-RS transmission. In other words, after one of the OFDM symbols used for CSI-RS transmission is obtained according to the formula (1), the OFDM symbol is used as reference, and several consecutive OFDM symbols are other OFDM symbols used for CSI-RS transmission. A quantity of OFDM symbols used for CSI-RS transmission in a cell in which the base station and the UE are located may be configured in the following two manners.

(1) The quantity of OFDM symbols used for CSI-RS transmission is preconfigured on each of the base station and the UE. The base station may complete CSI-RS mapping based on the preconfigured quantity of OFDM symbols, and the UE may complete CSI detection and measurement based on the preconfigured quantity of OFDM symbols.
(2) The base station notifies the UE of the quantity of OFDM symbols used for CSI-RS transmission. For example, the base station may notify the UE in a manner of a MAC-CE, DCI, or the like.

Optionally, when the CSI-RSs of the different cells are shifted by a fixed quantity of OFDM symbols in time domain, a time-domain location of a CSI-RS may further be preconfigured on the base station and/or the UE. The base station may perform CSI-RS mapping based on the preconfigured time-domain location of the CSI-RS, and the UE may perform CSI-RS detection based on the preconfigured time-domain location of the CSI-RS.

The CSI-RSs of the different cells are shifted by the fixed quantity of OFDM symbols in time domain, to avoid transmitting the CSI-RSs of the cells in a same OFDM symbol. This can effectively avoid mutual impact of CSI-RS transmission in neighboring cells.

Scenario 2: Considering that an application scenario of a high-frequency communications system includes an indoor hotspot (InH) and an ultra dense network (Ultra Dense Network, UDN), a specific coverage area may include a larger quantity of cells or TRPs. If CSI-RSs of different cells are shifted by a fixed time-domain location, a maximum quantity of cells or TRPs supported in a transmission unit (for example, in a subframe) is limited. Therefore, to resolve the foregoing problem, time domain offset locations of the CSI-RSs of the cells may be dynamically variable, so as to adapt to a requirement of deploying different quantities of cells or TRPs in a same coverage area. For example, when a quantity of cells or TRPs increases, a quantity of OFDM symbols of a time domain offset between the CSI-RSs of cells may be reduced, so as to reduce a probability of mutual interference between the CSI-RSs of the cells. A base station or UE may determine time domain offset locations of CSI-RSs of cells by using the following steps.

The base station determines a time domain offset location of a CSI-RS of one or more cells. For example, the time domain offset location of the CSI-RS may be determined by a degree of inter-cell interference. Three cells are used as an example for description. A cell 1, a cell 2, and a cell 3 are included in a specific coverage area. The degree of inter-cell interference may be determined by of a received signal strength of the UE. For example, if UE in the cell 1 cannot receive any signal sent by the cell 2, or a strength of a signal sent by the cell 2 and received by UE in the cell 1 is relatively low, it may be determined that a degree of interference between the cell 1 and the cell 2 is relatively small. In this case, a same time domain offset location of a CSI-RS may be used for the cell 1 and the cell 2. If there is a relatively large overlap area between coverage areas of the cell 1 and the cell 2, and a degree of interference between the cell 1 and the cell 2 is relatively large, different time domain offset locations of CSI-RSs may be preferentially used for the cell 1 and the cell 2.

The base station may notify the UE of the time domain offset location of the CSI-RS. For example, the base station may notify the UE in a manner of radio resource control (radio resource control, RRC) layer signaling configuration, a media access control-control element (Media Access Control-control element, MAC-CE), downlink control information (downlink control information, DCI), or the like.

The UE obtains a time domain offset location of a CSI-RS of a cell in which the UE is located. The time domain offset location of the CSI-RS may be a last OFDM symbol location used for CSI-RS transmission in a CSI-RS resource of the cell, or may be a first OFDM symbol location used for CSI-RS transmission in the CSI-RS resource of the cell. The CSI-RS resource may be a time-frequency resource set used for CSI-RS transmission, for example, an RE set used for CSI-RS transmission.

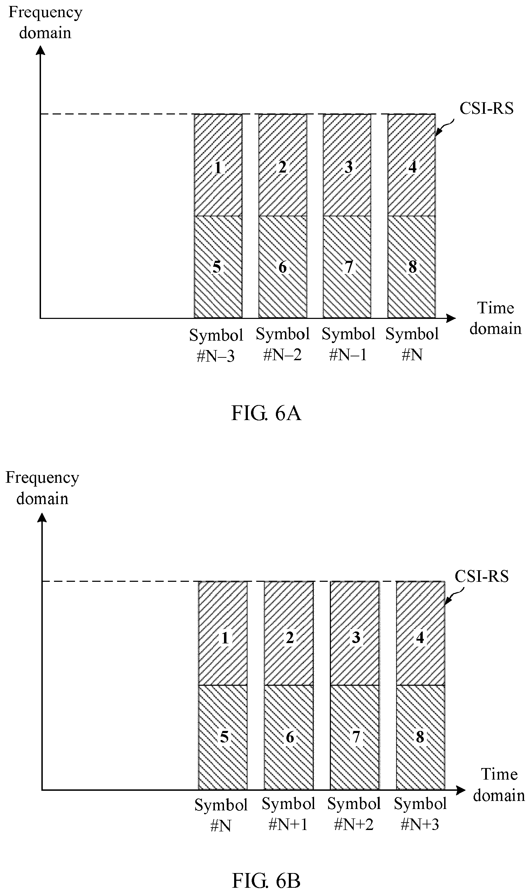

FIG. 6A is a schematic diagram of a time domain offset manner of a CSI-RS according to an embodiment of the present invention. As shown in FIG. 6A, when a time domain offset location, obtained by UE, of a CSI-RS is a last OFDM symbol used for CSI-RS transmission, during time-frequency resource configuration for the CSI-RS, an offset value offset may be used to indicate an offset location of another OFDM symbol used for CSI-RS transmission relative to the last OFDM symbol used for CSI-RS transmission. FIG. 6A shows eight CSI-RS ports and corresponding CSI-RS resource elements 1 to 8. An OFDM symbol #N represents the last OFDM symbol used for CSI-RS transmission, and other OFDM symbols used for CSI-RS transmission may include #N-1, #N-2, and #N-3. Time-domain locations of the other OFDM symbols used for CSI-RS transmission may be determined by using (N-offset). N indicates a number (#N) of the last OFDM symbol used for CSI-RS transmission. Offset indicates a time domain offset location of a CSI-RS port relative to the OFDM symbol #N in a cell. For example, a value of offset may be 1, 2, 3, or the like.

FIG. 6B is a schematic diagram of a time domain offset manner of a CSI-RS according to an embodiment of the present invention. As shown in FIG. 6B, when a time domain offset location, obtained by UE, of a CSI-RS is a first OFDM symbol used for CSI-RS transmission, similar to FIG. 6A, an offset value offset may also be used to indicate an offset location of another OFDM symbol used for CSI-RS transmission relative to the first OFDM symbol used for CSI-RS transmission. An OFDM symbol #N represents the first OFDM symbol used for CSI-RS transmission, and other OFDM symbols used for CSI-RS transmission may include #N+1, #N+2, and #N+3. Time-domain locations of the other OFDM symbols used for CSI-RS transmission may be determined by using (N+offset). N indicates a number (#N) of the first OFDM symbol used for CSI-RS transmission. Offset indicates a time domain offset location of a CSI-RS port relative to the OFDM symbol #N in a cell. For example, a value of offset may be 1, 2, 3, or the like.

Optionally, if a plurality of OFDM symbols used for CSI-RS transmission in a cell are consecutive in time domain, reference may also be made to the implementation of the scenario 1, time-domain locations of the plurality of OFDM symbols used for CSI-RS transmission in the cell is determined based on a quantity of OFDM symbols used for CSI-RS transmission. For example, when the quantity of symbols is 4, after obtaining a location of the first or the last OFDM symbol used for CSI-RS transmission, the UE may use the location of the first or the last OFDM symbol used for CSI-RS transmission as a reference location to determine other three consecutive OFDM symbols as the OFDM symbols used for CSI-RS transmission. For details about how configure the quantity of OFDM symbols used for CSI-RS transmission on the base station and the UE, refer to the implementation of the scenario 1, and details are not described herein again.

Dynamically configuring the time domain offset locations of the CSI-RSs of the cells can satisfy a requirement of deploying different quantities of cells or TRPs in a same coverage area.

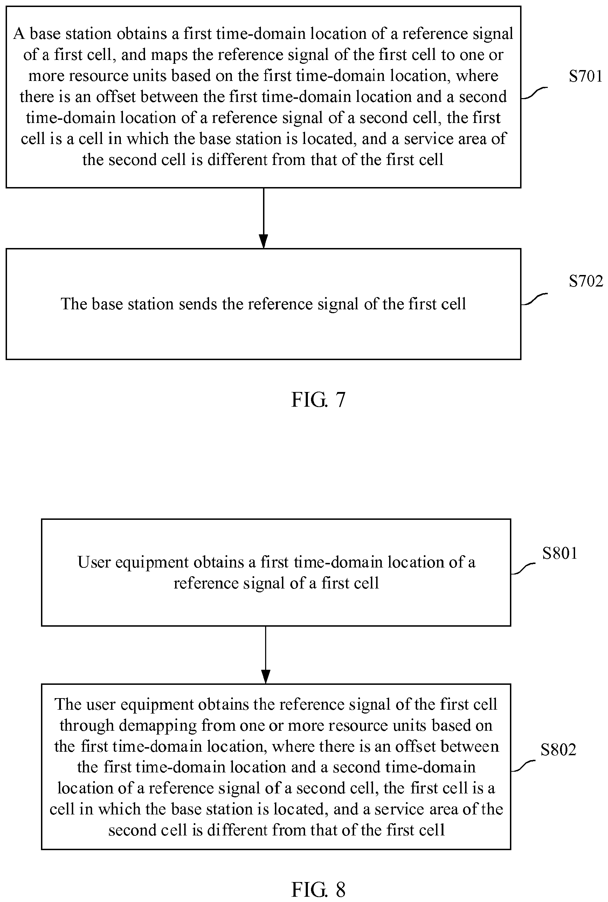

FIG. 7 is an example flowchart of a reference signal configuration method according to an embodiment of the present invention. As shown in FIG. 7, the method may be performed by a base station and includes the following steps.

S701: The base station obtains a first time-domain location of a reference signal of a first cell, and maps the reference signal of the first cell to one or more resource elements based on the first time-domain location, where there is an offset between the first time-domain location and a second time-domain location of a reference signal of a second cell, the first cell is a cell in which the base station is located, and a service area of the second cell is different from that of the first cell.

S702: The base station sends the reference signal of the first cell.

In an example, the reference signal may be a CSI-RS. The first cell and the second cell may be cells formed by a service area covered by one base station, or may be cells formed by service areas covered by different base stations. There is a time domain offset between CSI-RSs of any two cells, for example, the CSI-RSs of the any two cells are spaced at intervals of a specific quantity of OFDM symbols in time domain. CSI-RSs of cells may occupy completely non-overlapping time-domain resources. To be specific, different OFDM symbols are used for a CSI-RS of the first cell and a CSI-RS of the second cell. Alternatively, the CSI-RSs of the cells may occupy partially overlapping time-domain resources, for example, OFDM symbols used for the CSI-RS of the first cell and the CSI-RS of the second cell are partially different.

The reference signal of the first cell is carried by one or more CSI-RS ports. To reduce a period for obtaining the CSI-RS and eliminate impact of phase noise between symbols, a reference signal of one CSI-RS port may be mapped to only one OFDM symbol.

Optionally, a same frequency-domain resource may be used for a plurality of OFDM symbols carrying a CSI-RS of one or more cells, so as to reduce overheads for time-frequency resource configuration and indication of the CSI-RS.

Time domain offset locations of the CSI-RSs of the cells may be determined by the base station, or may be determined by a control node that controls a plurality of base stations. The time domain offset locations of the CSI-RSs of the cells may be fixed, or may be dynamically variable. For example, a time-domain location of a CSI-RS of a cell may be determined by a cell ID of the cell and a preset fixed quantity of time domain offset symbols. Alternatively, the time-domain location of the CSI-RS may be determined by a degree of inter-cell interference. For example, a degree of interference between the first cell and the second cell is relatively large, and therefore different time domain offset locations of CSI-RSs are used for the first cell and the second cell.

In this embodiment of the present invention, a time domain offset between the reference signals of the cells effectively avoids mutual impact of reference signals transmission in neighboring cells, and improves precision of channel measurement.

FIG. 8 is an example flowchart of a reference signal configuration method according to an embodiment of the present invention. As shown in FIG. 7, the method may be performed by a base station and includes the following steps.

S801: User equipment obtains a first time-domain location of a reference signal of a first cell.

S802: The user equipment obtains the reference signal of the first cell through demapping from one or more resource elements based on the first time-domain location, where there is an offset between the first time-domain location and a second time-domain location of a reference signal of a second cell, the first cell is a cell in which the base station is located, and a service area of the second cell is different from that of the first cell.

In an example, the reference signal may be a CSI-RS. The first cell and the second cell may be cells formed by a service area covered by one base station, or may be cells formed by service areas covered by different base stations. There is a time domain offset between CSI-RSs of any two cells, for example, the CSI-RSs of the any two cells are spaced at intervals of a specific quantity of OFDM symbols in time domain. CSI-RSs of cells may occupy completely non-overlapping time-domain resources. For example, different OFDM symbols are used for a CSI-RS of the first cell and a CSI-RS of the second cell. Alternatively, the CSI-RSs of the cells may occupy partially overlapping time-domain resources, for example, OFDM symbols used for the CSI-RS of the first cell and the CSI-RS of the second cell are partially different.

The reference signal of the first cell is carried by one or more CSI-RS ports. To reduce a period for obtaining the CSI-RS and eliminate impact of phase noise between symbols, a reference signal of one CSI-RS port may be mapped to only one OFDM symbol.

Optionally, a same frequency-domain resource may be used for a plurality of OFDM symbols carrying a CSI-RS of one or more cells, so as to reduce overheads for time-frequency resource configuration and indication of the CSI-RS.

Time domain offset locations of the CSI-RSs of the cells may be sent by the base station to the UE, or may be preconfigured on the UE. The time domain offset locations of the CSI-RSs of the cells may be fixed, or may be dynamically variable. For example, a time-domain location of a CSI-RS of a cell may be determined by a cell ID of the cell and a preset fixed quantity of time domain offset symbols. Alternatively, the time-domain location of the CSI-RS may be determined by a degree of inter-cell interference. For example, a degree of interference between the first cell and the second cell is relatively large, and therefore different time domain offset locations of CSI-RSs are used for the first cell and the second cell.

In this embodiment of the present invention, a time domain offset between the reference signals of the cells effectively avoids mutual impact of reference signals transmission in neighboring cells, and improves precision of channel measurement.

The methods shown in FIG. 7 and FIG. 8 may alternatively be collaboratively performed by a base station and UE in a communications system, for example, collaboratively performed by the base station and the UE in the communications system shown in FIG. 2A and FIG. 2B.

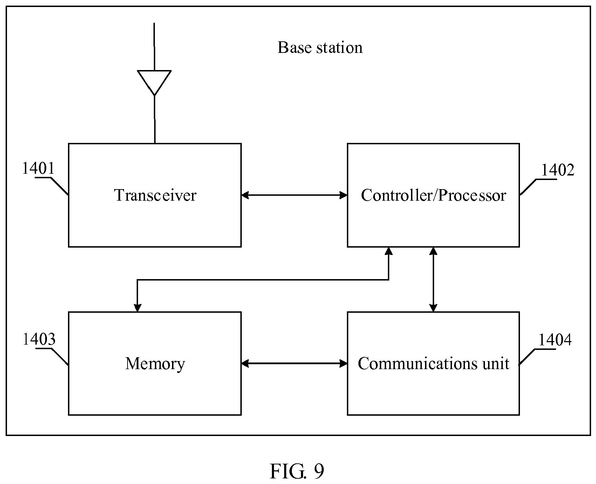

FIG. 9 is a possible schematic structural diagram of the base station included in the foregoing embodiments. The base station may be any one of the base station 20 shown in FIG. 2A and the base station 20a to the base station 20c shown in FIG. 2B. The base station shown in FIG. 9 may execute the embodiment shown in FIG. 7.

The base station includes a transceiver 1401 and a controller/processor 1402. The transceiver 1401 may be configured to support the base station in transmitting information to and receiving information from the UE in the foregoing embodiments. The controller/processor 1402 may be configured to perform various functions of communication with the UE or another network device. On an uplink, an uplink signal from the UE is received by an antenna, demodulated by the transceiver 1401, and further processed by the controller/processor 1402, so as to restore service data and signaling information that are sent by the UE. On a downlink, service data and a signaling message are processed by the controller/processor 1402, demodulated by the transceiver 1401 to generate a downlink signal, and then sent by the antenna to the UE.

For example, a carrier transmission method in this embodiment of the present invention may be collaboratively implemented by the transceiver 1401 and the controller/processor 1402. For example, the base station obtains a first time-domain location of a reference signal of a first cell by using the controller/processor 1402, and maps the reference signal of the first cell to one or more resource elements based on the first time-domain location, where there is an offset between the first time-domain location and a second time-domain location of a reference signal of a second cell, the first cell is a cell in which the base station is located, and a service area of the second cell is different from that of the first cell. The base station sends the reference signal of the first cell by using the transceiver 1401. The base station may further include a memory 1403. The memory 1403 may be configured to store program code and data of the base station. The base station may further include a communications unit 1404. The communications unit 1404 is configured to support communication between the base station and another network entity.

It can be understood that FIG. 9 merely shows a simplified design of the base station. In actual application, the base station may include any quantities of transmitters, receivers, processors, controllers, memories, communications units, or the like. All base stations capable of implementing the present invention fall within the protection scope of the present invention.

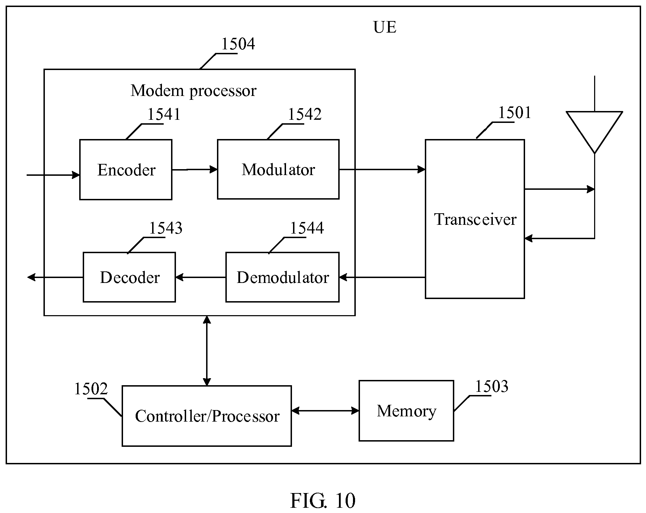

FIG. 10 shows a simplified schematic diagram of a possible design structure of the UE included in the foregoing embodiments. The UE may be any one of the UE 21a to the UE 21e shown in FIG. 2A and FIG. 2B. The UE may execute the embodiment shown in FIG. 8.

The UE includes a transceiver 1501 and a controller/processor 1502, and may further include a memory 1503 and a modem processor 1504. The transceiver 1501 adjusts (for example, performs analog conversion, filtering, amplification, and up-conversion) the output sample and generates an uplink signal. The uplink signal is transmitted by an antenna to a base station in the foregoing embodiment. On a downlink, the antenna receives signaling and data sent by the base station. The transceiver 1501 adjusts (for example, filtering, amplification, down-conversion, and digitalization) a signal received from the antenna and provides an input sample. In the modem processor 1504, an encoder 1541 receives service data and a signaling message that are to be sent on an uplink, and processes (for example, formats, encodes, and interleaves) the service data and the signaling message. A modulator 1542 further processes (for example, performs symbol mapping and modulation) the encoded service data and signaling message and provides an output sample. A demodulator 1544 processes (for example, demodulates) the input sample and provides symbol estimation. A decoder 1543 processes (for example, de-interleaves and decodes) the symbol estimation and provides decoded service data and signaling message that are sent to the UE. The encoder 1541, the modulator 1542, the demodulator 1544, and the decoder 1543 may be implemented by the integrated modem processor 1504. These units perform processing based on a radio access technology (for example, an access technology of an LTE system and another evolved system) used for a radio access network.

For example, a carrier transmission method in this embodiment of the present invention may be collaboratively implemented by the transceiver 1501 and the controller/processor 1502. Optionally, the method may be further collaboratively implemented by the transceiver 1501, the controller/processor 1502, and the modem processor 1504. For example, the user equipment receives a downlink signal of the base station by using a transceiver 1501, and the downlink signal includes a reference signal of a first cell, and the user equipment obtains a first time-domain location of the reference signal of the first cell by using the controller/processor 1502, and obtains the reference signal of the first cell through demapping from one or more resource elements based on the first time-domain location, where there is an offset between the first time-domain location and a second time-domain location of a reference signal of a second cell, the first cell is a cell in which the base station is located, and a service area of the second cell is different from that of the first cell. Alternatively, the controller/processor 1502 may control and manage an action of the UE and is configured to perform processing implemented by the UE in the foregoing embodiment. For example, the controller/processor 1502 is configured to support the UE in executing the embodiment shown in FIG. 8. The memory 1503 is configured to store program code and data used by the UE.

The controller/processor configured to implement the base station or the UE in the present invention may be a central processing unit (CPU), a general purpose processor, a digital signal processor (DSP), an application-specific integrated circuit (ASIC), a field programmable gate array (FPGA) or another programmable logic device, a transistor logic device, a hardware component, or any combination thereof. The controller/processor may implement or execute various example logical blocks, modules, and circuits described with reference to content disclosed in the present invention. Alternatively, the processor may be a combination of processors implementing a computing function, for example, a combination of one or more microprocessors, or a combination of the DSP and a microprocessor.

Methods or algorithm steps described in combination with the content disclosed in the present invention may be implemented by hardware, or may be implemented by a processor by executing a software instruction. The software instruction may include a corresponding software module. The software module may be stored in a RAM memory, a flash memory, a ROM memory, an EPROM memory, an EEPROM memory, a register, a hard disk, a removable hard disk, a CD-ROM, or a storage medium of any other form known in the art. For example, a storage medium is coupled to a processor, so that the processor can read information from the storage medium or write information into the storage medium. Certainly, the storage medium may alternatively be a constituent part of the processor. The processor and the storage medium may be located in an ASIC. In addition, the ASIC may be located in user equipment. Certainly, the processor and the storage medium may exist in the user equipment as discrete components.

A person skilled in the art should be aware that in the foregoing one or more examples, functions described in the present invention may be implemented by hardware, software, firmware, or any combination thereof. When the present invention is implemented by software, the foregoing functions may be stored in a computer readable medium or transmitted as one or more instructions or code in the computer readable medium. The computer readable medium includes a computer storage medium and a communications medium, where the communications medium includes any medium that enables a computer program to be transmitted from one place to another. The storage medium may be any available medium accessible to a general-purpose or dedicated computer.

**Claims**

1. A reference signal configuration method, wherein the method comprises:

   obtaining (S701), by a base station, a first time-domain location of a reference signal of a first cell, and mapping the reference signal of the first cell to one or more resource elements based on the first time-domain location, wherein there is a time domain offset between the first time-domain location and a second time-domain location of a reference signal of a second cell, the first cell is a cell in which the base station is located, and a service area of the second cell is different from that of the first cell; and
   sending (S702), by the base station, the reference signal of the first cell to a user equipment, UE;
   wherein the time domain offset between the first time-domain location of the reference signal of the first cell and the second time-domain location of the reference signal of the second cell is sent to the UE by the base station or is preconfigured on the UE;
   **characterised in that**
   the first time-domain location is determined based on a degree of interference between the first cell and the second cell; and
   wherein the first time-domain location is obtained by the base station by using a location of a first symbol, and the first symbol is a first symbol or a last symbol used for transmitting the reference signal of the first cell.

2. The method according to claim 1, wherein a time-domain start location of the reference signal of the first cell is different from a time-domain start location of the reference signal of the second cell to set the time domain offset, or a time-domain end location of the reference signal of the first cell is different from a time-domain end location of the reference signal of the second cell to set the time domain offset.

3. The method according to claim 1, wherein a frequency-domain resource occupied by the reference signal of the first cell is at least partially the same as a frequency-domain resource occupied by the reference signal of the second cell.

**4.** The method according to any one of claims 1 to 3, wherein the reference signal of the first cell is carried by one or more channel state information reference signal, CSI-RS, ports, and a reference signal, of the first cell, of one CSI-RS port is mapped to one time domain symbol.

**5.** A reference signal configuration method, wherein the method comprises:

obtaining (S801), by user equipment, a first time-domain location of a reference signal of a first cell from a base station;

obtaining (S802), by the user equipment, the reference signal of the first cell through demapping from one or more resource elements based on the first time-domain location, wherein there is a time domain offset between the first time-domain location and a second time-domain location of a reference signal of a second cell, the first cell is a cell in which the base station is located, and a service area of the second cell is different from that of the first cell; and

determining, by the user equipment, based on the time domain offset and the first time-domain location, the second time-location of the reference signal of the second cell;

wherein the time-domain offset between the first time-domain location of the reference signal of the first cell and the second time-domain location of the reference signal of the second cell is obtained from the base station or is preconfigured on the UE;

**characterised in that**

the first time-domain location is determined based on a degree of interference between the first cell and the second cell; and

wherein the first time-domain location is obtained by the user equipment by using an offset value, and the offset value is a quantity of offset symbols of the first time-domain location relative to the first symbol.

**6.** The method according to claim 5, wherein
a time-domain start location of the reference signal of the first cell is different from a time-domain start location of the reference signal of the second cell to set the time domain offset, or a time-domain end location of the reference signal of the first cell is different from a time-domain end location of the reference signal of the second cell to set the time domain offset.

**7.** The method according to claim 5, wherein a frequency-domain resource occupied by the reference signal of the first cell is at least partially the same as a frequency-domain resource occupied by the reference signal of the second cell.

**8.** The method according to any one of claims 5 to 7, wherein the reference signal of the first cell is carried by one or more channel state information reference signal CSI-RS ports, and a reference signal, of the first cell, of one CSI-RS port is mapped to one time domain symbol.

**9.** A base station being configured to carry out the method according to any one of claims 1 to 4.

**10.** User equipment being configured to carry out the method according to any one of claims 5 to 8.

**11.** A communications system, wherein the communications system comprises the base station according to claim 9 and the user equipment according to claim 10.

**12.** A computer program product, comprising instructions, which when executed by a base station, cause the base station to carry out the method according to any one of claims 1 to 4.

**13.** A computer program product, comprising instructions, which when executed by a user equipment, cause the user equipment to carry out the method according to any one of claims 5 to 8.

**Patentansprüche**

**1.** Referenzsignalkonfigurationsverfahren, wobei das Verfahren Folgendes umfasst:

Erhalten (S701), durch eine Basisstation, eines ersten Zeitdomänenortes eines Referenzsignals einer ersten Zelle, und Abbilden des Referenzsignals der ersten Zelle auf einem oder mehreren Ressourcenelementen basierend auf dem ersten Zeitdomänenort, wobei es einen Zeitdomänenversatz zwischen dem ersten Zeitdomänenort und einem zweiten Zeitdomänenort eines Referenzsignals einer zweiten Zelle gibt, die erste Zelle eine Zelle ist, in der sich die Basisstation befindet, und sich ein Dienstbereich der zweiten Zelle von demjenigen der ersten Zelle unterscheidet; und

Senden (S702), durch die Basisstation, des Referenzsignals der ersten Zelle an eine Benutzerausrüstung (user equipment - UE);

wobei der Zeitdomänenversatz zwischen dem ersten Zeitdomänenort des Referenzsignals der ersten Zelle und dem zweiten Zeitdomänenort des Referenzsignals der zweiten Zelle von der Basisstation an das UE gesendet wird oder auf der UE vorkonfiguriert ist;

**dadurch gekennzeichnet, dass**

der erste Zeitdomänenort basierend auf einem Interferenzgrad zwischen der ersten Zelle und der zweiten Zelle bestimmt wird; und

wobei der erste Zeitdomänenort durch die Basisstation erhalten wird, indem ein Ort eines ersten Symbols verwendet wird, und das erste Symbol ein erstes Symbol oder ein letztes Symbol ist, das zum Übertragen des Referenzsignals der ersten Zelle verwendet wird.

2. Verfahren nach Anspruch 1, wobei sich ein Zeitdomänenstartort des Referenzsignals der ersten Zelle von einem Zeitdomänenstartort des Referenzsignals der zweiten Zelle unterscheidet, um den Zeitdomänenversatz einzustellen, oder sich ein Zeitdomänenendort des Referenzsignals der ersten Zelle von einem Zeitdomänenendort des Referenzsignals der zweiten Zelle unterscheidet, um den Zeitdomänenversatz einzustellen.

3. Verfahren nach Anspruch 1, wobei eine Frequenzdomänenressource, die durch das Referenzsignal der ersten Zelle belegt wird, zumindest teilweise dieselbe wie eine Frequenzdomänenressource ist, die durch das Referenzsignal der zweiten Zelle belegt wird.

4. Verfahren nach einem der Ansprüche 1 bis 3, wobei das Referenzsignal der ersten Zelle von einem oder mehreren Kanalzustandsinformationsreferenzsignal- (channel state information reference signal - CSI-RS-)Anschlüssen getragen wird, und ein Referenzsignal der ersten Zelle von einem CSI-RS-Anschluss auf einem Zeitdomänensymbol abgebildet ist.

5. Referenzsignalkonfigurationsverfahren, wobei das Verfahren Folgendes umfasst:

Erhalten (S801), durch Benutzerausrüstung, eines ersten Zeitdomänenortes eines Referenzsignals einer ersten Zelle von einer Basisstation;

Erhalten (S802), durch die Benutzerausrüstung, des Referenzsignals der ersten Zelle durch Rückabbilden von einem oder mehreren Ressourcenelementen basierend auf dem ersten Zeitdomänenort, wobei es einen Zeitdomänenversatz zwischen dem ersten Zeitdomänenort und einem zweiten Zeitdomänenort eines Referenzsignals einer zweiten Zelle gibt, die erste Zelle eine Zelle ist, in der sich die Basisstation befindet, und sich ein Dienstbereich der zweiten Zelle von demjenigen der ersten Zelle unterscheidet; und

Bestimmen, durch die Benutzerausrüstung, basierend auf dem Zeitdomänenversatz und dem ersten Zeitdomänenort, des zweiten Zeitortes des Referenzsignals der zweiten Zelle;

wobei der Zeitdomänenversatz zwischen dem ersten Zeitdomänenort des Referenzsignals der ersten Zelle und dem zweiten Zeitdomänenort des Referenzsignals der zweiten Zelle von der Basisstation erhalten wird oder auf der UE vorkonfiguriert ist;

**dadurch gekennzeichnet, dass**

der erste Zeitdomänenort basierend auf einem Interferenzgrad zwischen der ersten Zelle und der zweiten Zelle bestimmt wird; und

wobei der erste Zeitdomänenort durch die Benutzerausrüstung erhalten wird, indem ein Versatzwert verwendet wird, und der Versatzwert eine Menge von Versatzsymbolen des ersten Zeitdomänenortes relativ zu dem ersten Symbol ist.

6. Verfahren nach Anspruch 5, wobei sich ein Zeitdomänenstartort des Referenzsignals der ersten Zelle von einem Zeitdomänenstartort des Referenzsignals der zweiten Zelle unterscheidet, um den Zeitdomänenversatz einzustellen, oder sich ein Zeitdomänenendort des Referenzsignals der ersten Zelle von einem Zeitdomänenendort des Referenzsignals der zweiten Zelle unterscheidet, um den Zeitdomänenversatz einzustellen.

7. Verfahren nach Anspruch 5, wobei eine Frequenzdomänenressource, die durch das Referenzsignal der ersten Zelle belegt ist, zumindest teilweise dieselbe wie eine Frequenzdomänenressource ist, die durch das Referenzsignal der zweiten Zelle belegt ist.

**8.** Verfahren nach einem der Ansprüche 5 bis 7, wobei das Referenzsignal der ersten Zelle von einem oder mehreren Kanalzustandsinformationsreferenzsignal- (channel state information reference signal - CSI-RS-)Anschlüssen getragen wird, und ein Referenzsignal der ersten Zelle von einem CSI-RS-Anschluss auf einem Zeitdomänensymbol abgebildet ist.

**9.** Basisstation, die konfiguriert ist, um das Verfahren nach einem der Ansprüche 1 bis 4 durchzuführen.

**10.** Benutzerausrüstung, die konfiguriert ist, um das Verfahren nach einem der Ansprüche 5 bis 8 durchzuführen.

**11.** Kommunikationssystem, wobei das Kommunikationssystem die Basisstation nach Anspruch 9 und die Benutzerausrüstung nach Anspruch 10 umfasst.

**12.** Computerprogrammprodukt, das Anweisungen umfasst, die bei Ausführung durch eine Basisstation die Basisstation dazu veranlassen, das Verfahren nach einem der Ansprüche 1 bis 4 durchzuführen.

**13.** Computerprogrammprodukt, das Anweisungen umfasst, die bei Ausführung durch eine Benutzerausrüstung die Benutzerausrüstung dazu veranlassen, das Verfahren nach einem der Ansprüche 5 bis 8 durchzuführen.

**Revendications**

**1.** Procédé de configuration de signal de référence, dans lequel le procédé comprend :

l'obtention (S701), par une station de base, d'un premier emplacement dans le domaine temporel d'un signal de référence d'une première cellule, et le mappage du signal de référence de la première cellule sur un ou plusieurs éléments de ressource sur la base du premier emplacement dans le domaine temporel, dans lequel il existe un décalage dans le domaine temporel entre le premier emplacement dans le domaine temporel et un second emplacement dans le domaine temporel d'un signal de référence d'une seconde cellule, la première cellule est une cellule dans laquelle se trouve la station de base, et une zone de service de la seconde cellule est différente de celle de la première cellule ; et
l'envoi (S702), par la station de base, du signal de référence de la première cellule à un équipement utilisateur, UE ;
dans lequel le décalage dans le domaine temporel entre le premier emplacement dans le domaine temporel du signal de référence de la première cellule et le second emplacement dans le domaine temporel du signal de référence de la seconde cellule est envoyé à l'UE par la station de base ou est préconfiguré sur l'UE ;
**caractérisé en ce que**
le premier emplacement dans le domaine temporel est déterminé sur la base d'un degré d'interférence entre la première cellule et la seconde cellule ; et
dans lequel le premier emplacement dans le domaine temporel est obtenu par la station de base en utilisant un emplacement d'un premier symbole, et le premier symbole est un premier symbole ou un dernier symbole utilisé pour transmettre le signal de référence de la première cellule.

**2.** Procédé selon la revendication 1, dans lequel un emplacement de début de domaine temporel du signal de référence de la première cellule est différent d'un emplacement de début de domaine temporel du signal de référence de la seconde cellule pour régler le décalage dans le domaine temporel, ou un emplacement de fin de domaine temporel du signal de référence de la première cellule est différent d'un emplacement de fin de domaine temporel du signal de référence de la seconde cellule pour régler le décalage dans le domaine temporel.

**3.** Procédé selon la revendication 1, dans lequel une ressource de domaine de fréquence occupée par le signal de référence de la première cellule est au moins partiellement la même qu'une ressource de domaine de fréquence occupée par le signal de référence de la seconde cellule.

**4.** Procédé selon l'une quelconque des revendications 1 à 3, dans lequel le signal de référence de la première cellule est transporté par un ou plusieurs ports de signal de référence d'informations d'état de canal, CSI-RS, et un signal de référence, de la première cellule, d'un port CSI-RS est mappé sur un symbole de domaine temporel.

**5.** Procédé de configuration de signal de référence, dans lequel le procédé comprend :

l'obtention (S801), par un équipement utilisateur, d'un premier emplacement dans le domaine temporel d'un signal de référence d'une première cellule à partir d'une station de base ;

l'obtention (S802), par l'équipement utilisateur, du signal de référence de la première cellule par le démappage d'un ou plusieurs éléments de ressource sur la base du premier emplacement dans le domaine temporel, dans lequel il existe un décalage dans le domaine temporel entre le premier emplacement dans le domaine temporel et un second emplacement dans le domaine temporel d'un signal de référence d'une seconde cellule, la première cellule est une cellule dans laquelle se trouve la station de base, et une zone de service de la seconde cellule est différente de celle de la première cellule ; et

la détermination, par l'équipement utilisateur, sur la base du décalage dans le domaine temporel et du premier emplacement dans le domaine temporel, du second emplacement dans le temps du signal de référence de la seconde cellule ;

dans lequel le décalage dans le domaine temporel entre le premier emplacement dans le domaine temporel du signal de référence de la première cellule et le second emplacement dans le domaine temporel du signal de référence de la seconde cellule est obtenu à partir de la station de base ou est préconfiguré sur l'UE ;

**caractérisé en ce que**

le premier emplacement dans le domaine temporel est déterminé sur la base d'un degré d'interférence entre la première cellule et la seconde cellule ; et

dans lequel le premier emplacement dans le domaine temporel est obtenu par l'équipement utilisateur en utilisant une valeur de décalage, et la valeur de décalage est une quantité de symboles de décalage du premier emplacement dans le domaine temporel par rapport au premier symbole.

**6.** Procédé selon la revendication 5, dans lequel un emplacement de début de domaine temporel du signal de référence de la première cellule est différent d'un emplacement de début de domaine temporel du signal de référence de la seconde cellule pour régler le décalage dans le domaine temporel, ou un emplacement de fin de domaine temporel du signal de référence de la première cellule est différent d'un emplacement de fin de domaine temporel du signal de référence de la seconde cellule pour régler le décalage dans le domaine temporel.

**7.** Procédé selon la revendication 5, dans lequel une ressource de domaine de fréquence occupée par le signal de référence de la première cellule est au moins partiellement la même qu'une ressource de domaine de fréquence occupée par le signal de référence de la seconde cellule.

**8.** Procédé selon l'une quelconque des revendications 5 à 7, dans lequel le signal de référence de la première cellule est transporté par un ou plusieurs ports de signal de référence d'informations d'état de canal, CSI-RS, et un signal de référence, de la première cellule, d'un port CSI-RS est mappé sur un symbole de domaine temporel.

**9.** Station de base conçue pour mettre en œuvre le procédé selon l'une quelconque des revendications 1 à 4.

**10.** Équipement utilisateur conçu pour mettre en œuvre le procédé selon l'une quelconque des revendications 5 à 8.

**11.** Système de communication, dans lequel le système de communication comprend la station de base selon la revendication 9 et l'équipement utilisateur selon la revendication 10.

**12.** Produit de programme informatique comprenant des instructions qui, lorsqu'elles sont exécutées par une station de base, amènent la station de base à mettre en œuvre le procédé selon l'une quelconque des revendications 1 à 4.

**13.** Produit de programme informatique, comprenant des instructions qui, lorsqu'elles sont exécutées par un équipement utilisateur, amènent l'équipement utilisateur à mettre en œuvre le procédé selon l'une quelconque des revendications 5 à 8.

CSI-RS

$R_{15}R_{15}$

$R_{16}R_{16}$

$R_{19}R_{19}$

$R_{20}R_{20}$

Frequency domain

$l = 0$      $l = 6$   $l = 0$      $l = 6$   $l = 0$      $l = 6$   $l = 0$      $l = 6$

$l = 0$      $l = 6$   $l = 0$      $l = 6$   $l = 0$      $l = 6$   $l = 0$      $l = 6$

Time domain

TO FIG. 1B

FIG. 1A

CONT. FROM FIG. 1A

$R_{17}$ $R_{17}$

$R_{18}$ $R_{18}$

$l = 0$ $l = 6$ $l = 0$ $l = 6$ $l = 0$ $l = 6$ $l = 0$ $l = 6$

$R_{21}$ $R_{21}$

$R_{22}$ $R_{22}$

$l = 0$ $l = 6$ $l = 0$ $l = 6$ $l = 0$ $l = 6$ $l = 0$ $l = 6$

FIG. 1B

FIG. 2A

Control node

200

BS 20a

BS 20b

BS 20c

UE 21a

UE 21b

UE 21c

UE 21d

UE 21e

FIG. 2B

CSI-RS

10 ms

| 0 | 1 | 2 | 3 | 4 | 5 | 6 | 7 | 8 | 9 |

| 0 | 1 | 2 | 3 | 4 | 5 | 6 | 0 | 1 | 2 | 3 | 4 | 5 | 6 |

Slot

RB

RB

Subframe

Subcarrier

R R

0
1
2
3
4
5
6
7
8
9
10
11

OFDM symbol

Slot 0 — Slot 1

Subframe

FIG. 3

FIG. 4

CSI-RS

FIG. 5

FIG. 6A

FIG. 6B

A base station obtains a first time-domain location of a reference signal of a first cell, and maps the reference signal of the first cell to one or more resource units based on the first time-domain location, where there is an offset between the first time-domain location and a second time-domain location of a reference signal of a second cell, the first cell is a cell in which the base station is located, and a service area of the second cell is different from that of the first cell    S701

The base station sends the reference signal of the first cell    S702

FIG. 7

User equipment obtains a first time-domain location of a reference signal of a first cell    S801

The user equipment obtains the reference signal of the first cell through demapping from one or more resource units based on the first time-domain location, where there is an offset between the first time-domain location and a second time-domain location of a reference signal of a second cell, the first cell is a cell in which the base station is located, and a service area of the second cell is different from that of the first cell    S802

FIG. 8

Base station

1401 — Transceiver ⟷ Controller/Processor — 1402

1403 — Memory ⟷ Communications unit — 1404

FIG. 9

FIG. 10

**EP 3 550 758 B1**

**REFERENCES CITED IN THE DESCRIPTION**

**Patent documents cited in the description**

- WO 2011105726 A2